# EUROPÄISCHE PATENTANMELDUNG

(11) **EP 1 795 651 A2**
(43) Veröffentlichungstag der Anmeldung: **13.06.2007**
(21) Anmeldenummer: 06022568.7
(22) Anmeldetag: 28.10.2006
(51) Int. Cl.: E01F 8/00, F16B 5/00

(54) **Wandelement mit seitlichen Anschlussmitteln**

(30) Priorität: 09.12.2005 DE 102005058770
(71) Anmelder: Thomas Lorenz Industrietechnik GmbH & Co. KG, 49134 Wallenhorst (DE)
(72) Erfinder: Lorenz, Thomas, 49134 Wallenhorst (DE)
(74) Vertreter: Habbel, Ludwig

(57) **Zusammenfassung**

Bei einem Wandelement (2), mit seitlichen Anschlussmitteln zur Bildung eines Verbunds mit einem benachbarten, gleichartigen Wandelement, schlägt die Erfindung vor, dass die Anschlussmittel als eine Reihe von übereinander angeordneten Laschen (5) ausgestaltet sind, wobei die Laschen zumindest im Bereich ihrer freien seitlichen Enden gegenüber der Flächenebene des Wandelementes schräg angeordnet sind, und wobei das Wandelement an seinen beiden Seiten miteinander korrespondierend ausgestaltete Laschen aufweist, derart, dass die Laschen zweier benachbarter, gleichartiger Wandelemente aufgrund ihrer Schrägstellung reißverschlussähnlich ineinander steckbar sind und einen Verbund zur Aufnahme von Kräften bilden, die quer zur Flächenebene des Wandelementes gerichtet sind.

## Beschreibung

Die Erfindung betrifft ein Wandelement.

Aus der Praxis ist es bekannt, Wandelemente auch im Freien zu verwenden, beispielsweise zur Errichtung von Lärmschutzwänden. Die Verbindung der einzelnen Wandelemente miteinander ist dabei vergleichsweise aufwendig, da diese entweder unlösbar miteinander verbunden werden, beispielsweise mineralisch miteinander verbunden werden oder miteinander verklebt werden, oder da die Verbindung mechanisch über eine Vielzahl von Schrauben erfolgt, so dass zwar eine lösbare Verbindung geschaffen wird, diese aber nur mit einem erheblichen Zeitaufwand geschaffen werden und später wieder gelöst werden kann.

Insbesondere falls einzelne Wandelemente aus der gesamten Lärmschutzwand entfernt werden sollen, bewirken diese bekannten Wandelemente, dass derartige Vorhaben entweder nicht durchführbar oder nur mit einem erheblichen Arbeitsaufwand durchführbar sind.

Aus der FR 2 458 639 A1 sind aneinanderzureihende Wandelemente bekannt. Sie dienen als zur Errichtung einer Trennwand innerhalb eines Gebäudes, und zwar innerhalb eines Zimmers als schnell aufstellbarer Raumteiler, um einen größeren Raum bzw. Saal in zwei oder mehrere kleinere Räume zu unterteilen. Winklig verlaufende Überstände an den beiden aufrechten Seitenkanten der Wandelemente dienen als Anschlussmittel dazu, zwei gleichartige Wandelemente werkzeuglos miteinander zu verbinden. Die Wandelemente einschließlich der Anschlussmittel stellen ein Flächenbauteil dar, welches sich in einer einzigen Ebene erstreckt. Benachbarte Wandelemente müssen daher winklig zueinander ausgerichtet werden, damit die Anschlussmittel zweier Wandelemente zusammenwirken können, indem sich die Ebenen dieser beiden Wandelemente durchdringen. Die Ausgestaltung einer durchgängig geradlinigen Wand ist nicht möglich.

Aus der DE 1 609 645 A ist eine bolzenlose Kantenverbindung flächenförmiger Elemente bekannt. Die Anschlussmittel zweier benachbarter Flächenelemente bilden ein Scharnier und ragen hierzu aus der Ebene des übrigen Flächenelementes heraus. Aus einer Winkelstellung zueinander, in welcher sich zwei Flächenelemente zunächst befinden, können sie derart in eine gestreckte Stellung verschwenkt werden, dass die korrespondierenden Anschlussmittel aneinander auf einer kurvigen Bahn abgleiten und sich gegenseitig hintergreifen.

Die Verschwenkbarkeit der beiden benachbarten Flächenelemente gegeneinander ermöglicht deren Anordnung in unterschiedlichen Winkelstellungen zueinander, darunter auch die durchgängig geradlinige Ausrichtung zweier benachbarter Flächenelemente. Jedoch ist eine Verschwenkung unumgänglich, um die beiden benachbarten Flächenelemente miteinander verbinden zu können. Dies ist aus zwei Gründen nachteilig:
Erstens ist es nachteilig bei großformatigen oder schweren Flächenelementen, da deren Handhabung durch das Erfordernis der Verschwenkung sehr schwierig ist.

Zweitens wäre eine Verwendung der Flächenelemente als Wandelemente, die zu mehreren aneinandergereiht insgesamt eine längere Wand bilden, insofern nachteilig, als ein Flächenelement aus der gesamten Wand nicht einzeln herauslösbar ist, denn die Verschwenkung an seiner einen Seite wird durch seine Verbindung mit der übrigen Wand an der anderen Seite behindert. Es müssten also, ausgehend von einem Ende der Wand, nach und nach sämtliche Flächenelemente entfernt werden, um ein bestimmtes Element entfernen zu können, beispielsweise ein beschädigtes Flächenelement austauschen zu können, und anschließend müssten die zuvor entfernten, intakten Flächenelemente nach und nach wieder montiert werden. Dies ist in der Praxis unwirtschaftlich, und tatsächlich ist der Gegenstand der DE 1 609 645 A dazu vorgesehen, ein Gelenk beispielsweise von Gliederbändern, Schnappdeckeln u. dergl. zu bilden, also nur zwei benachbarte Flächenelemente miteinander zu verbinden und nicht eine größere Aneinanderreihung mehrerer Flächenelemente zu schaffen.

Der Erfindung liegt die Aufgabe zugrunde, ein Wandelement zu schaffen, welches mit einem möglichst geringen Aufwand mit gleichartigen Wandelementen verbunden und aus einer bestehenden Wand mit möglichst geringem Aufwand wieder entfernt werden kann.

Diese Aufgabe wird durch ein Wandelement mit den Merkmalen des Anspruchs 1 gelöst.

Die Erfindung schlägt mit anderen Worten vor, einen rein mechanischen Verbund zu bewirken und zwar durch die Ausgestaltung der Seitenkanten des Wandelementes selbst, ohne dass es zusätzlicher Verbindungsmittel wie Schrauben, Klebstoff oder dergleichen bedarf. Es wird also nicht nur eine wieder lösbare Verbindung geschaffen, sondern auch eine besonders leicht lösbare Verbindung, da es für die Entfernung eines einzelnen Wandelementes aus einer gesamten Wand nicht der Betätigung einer Vielzahl von Verbindungselementen bedarf.

Durch die Anordnung seitlicher schräg gestellter Laschen wird ein nahezu reißverschlussähnliches Verschlusssystem zwischen zwei benachbarten Wandelementen geschaffen. Wenn ein Wandelement angehoben wird, bis die sich gegenseitig hintergreifenden Laschen außer Eingriff miteinander gebracht sind, kann das Wandelement in dieser angehobenen Stellung um seine Hochachse verschwenkt werden, so dass es außer Kontakt mit den jeweils benachbarten Wandelementen gerät und anschließend einfach entfernt werden kann. Die entsprechende Hubhöhe, die dazu erforderlich ist, wird durch die Höhe der einzelnen Laschen bestimmt und ist drastisch geringer als die Gesamthöhe des Wandelementes, so dass im Vergleich zu Wandelementen, die in U-Profilen über ihre gesamte Höhe geführt sind und nur nach Anheben aus dem gesamten U-Profil aus der Wandanlage entfernbar sind, die Hubhöhe zur Handhabung des vorschlagsgemäßen Wandelementes deutlich geringer ist, was ebenfalls den Arbeitsaufwand bei der Montage und bei der Demontage eines Wandelementes verringert und aufgrund dieser deutlich verringerten Hubhöhe auch erheblich geringere Anforderungen an das erforderliche Werkzeug bzw. die erforderlichen Maschinen stellt.

Vorteilhaft kann ein Höhenversatz der Laschen an den beiden Seiten des Wandelementes vorgesehen sein. Auf diese Weise und insbesondere, wenn der höhenversetzt etwa die Hälfte der Höhe einer Lasche beträgt, wird einerseits eine zuverlässige mechanische Verriegelung zwischen benachbarten Wandelementes ermöglicht, zudem die erforderliche Hubhöhe zum Ausheben eines Wandelementes aus dem Verbund einer gesamten Wandanlage weiter verringert und die Montage der Wandelementes vereinfacht.

Vorteilhaft sind die Laschen jeweils in sich verbogen, so dass sie dort, wo sie an das Wandelement anschließen, in einer Reihe bzw. Linie miteinander fluchtend an das Wandelement anschließen, an ihrem freien Ende jedoch gegenüber dieser Linie schräg gestellt sind und dadurch das Hintergreifen der benachbarten Laschen eines benachbarten Wandelementes erleichtern.

Vorteilhaft kann das Wandelement eine Vielzahl von Durchbrüchen aufweisen. So bietet es einen guten Halt für Pflanzen, so dass die Pflanzen durch ihre unregelmäßige Wandoberfläche, die sie bilden, einerseits einen guten Schallschutz ermöglichen und andererseits durch die Begrünung eine optimale Integration der Wand in ein natürliches Umfeld ermöglichen, so dass die Wand nicht nur als Schallschutz, sondern beispielsweise auch als Sichtschutzwand eingesetzt werden kann.

Eine hervorragende Stabilität der Wandelemente bei möglichst geringem Materialeinsatz kann durch aufrecht verlaufende Aussteifungsrippen ermöglicht werden. Insbesondere, wenn das Wandelement aus Kunststoff besteht, kann so ein leicht gewichtiges Wandelement geschaffen werden, welches problemlos ohne größeren maschinellen Aufwand handhabbar ist und beispielsweise von Hand oder allenfalls mit vergleichsweise leichtem Gerät bei der Montage oder Demontage gehandhabt werden kann.

Ein Ausführungsbeispiel der Erfindung wird anhand der rein schematischen Zeichnungen nachfolgend näher erläutert. Dabei zeigt
- Fig. 1: eine perspektivische Ansicht auf eine Wandanlage bestehend aus mehreren Wandelementen,
- Fig. 2 u. 3: in gegenüber Fig. 1 vergrößertem Maßstab Detailansichten der Wandanlage von Fig. 1,
- Fig. 4: einen Ausschnitt einer Wandanlage ähnlich der von Fig. 1 während des Montage- oder Demontagevorgangs eines Wandelementes.

In den Zeichnungen ist mit 1 insgesamt eine Wandanlage bezeichnet, die aus mehreren Wandelementen 2 besteht. Jedes Wandelement 2 weist drei aufrecht verlaufende Aussteifungsrippen 3 auf, und eine Vielzahl von Durchbrüchen 4.

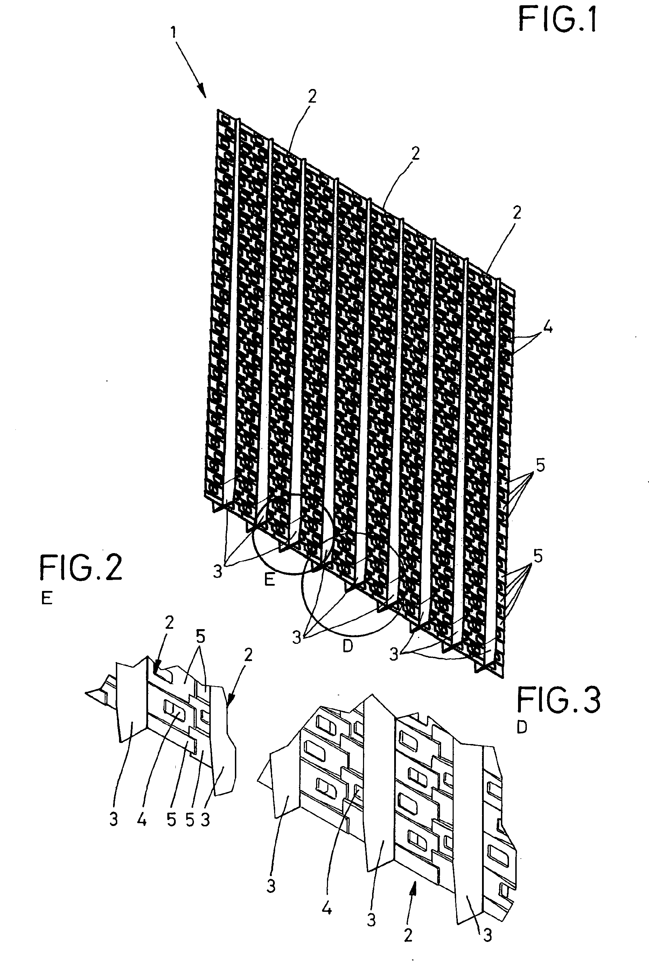

An den beiden aufrechten Seitenkanten eines jeden Wandelementes 2 ist jeweils eine Vielzahl von Laschen 5 vorgesehen, die an eine Aussteifungsrippe 3 in einer durchgehenden geraden Linie anschließen. Ausgehend von dieser geradlinigen Ausrichtung sind die einzelnen Laschen 5 in sich tordiert, so dass sie mit ihrem freien Ende schräg zu der Linie stehen, mit welcher sie an die Aussteifungsrippe 3 anschließen. Hierdurch ergibt sich, wie insbesondere aus Fig. 2 deutlich wird, ein schräger keilförmiger Zwischenraum zwischen zwei übereinander angeordneten Laschen 5 desselben Wandelementes 2. Durch diesen keilförmigen Zwischenraum können die Laschen 5 eines jeweils benachbarten Wandelementes 2 eingeführt werden, so dass sich insgesamt ein etwa reißverschlussähnlicher Verbund zwischen den Laschen 5 zweier benachbarter Wandelemente 2 ergibt, wie dies ebenfalls aus Fig. 2 deutlich ersichtlich ist.

Während Fig. 2 ein Detail der Wandanlage 1 darstellt, nämlich am unteren Ende der Wandelemente 2, wo zwei benachbarte Wandelemente 2 miteinander verbunden sind, stellt Fig. 3 ein Element in der Ansicht eines einzigen Wandelementes 2 dar. Wie dabei zu erkennen ist, ist die gesamte Fläche des Wandelementes 2 optisch genauso oder zumindest sehr ähnlich ausgestaltet wie die Verbindungszone zweier benachbarter Wandelemente 2, so dass insgesamt bei einer größeren, mehrere Wandelemente 2 umfassenden Wandanlage die Aufteilung der Wandanlage 1 in mehrere einzelne Wandelemente optisch kaum auffällt.

Wie anhand von Fig. 2 deutlich wird reicht es aus, eines der beiden Wandelemente 2 etwa um die halbe Höhe einer Laschenhöhe anzuheben, um sämtliche Laschen 5 der benachbarten Wandelemente 2 außer Eingriff zu bringen, so dass mit dieser sehr geringen Hubhöhe es möglich ist, das angehobene Wandelement 2 anschließend um seine Hochachse zu verdrehen und somit von den benachbarten Wandelementen 2 vollständig zu lösen.

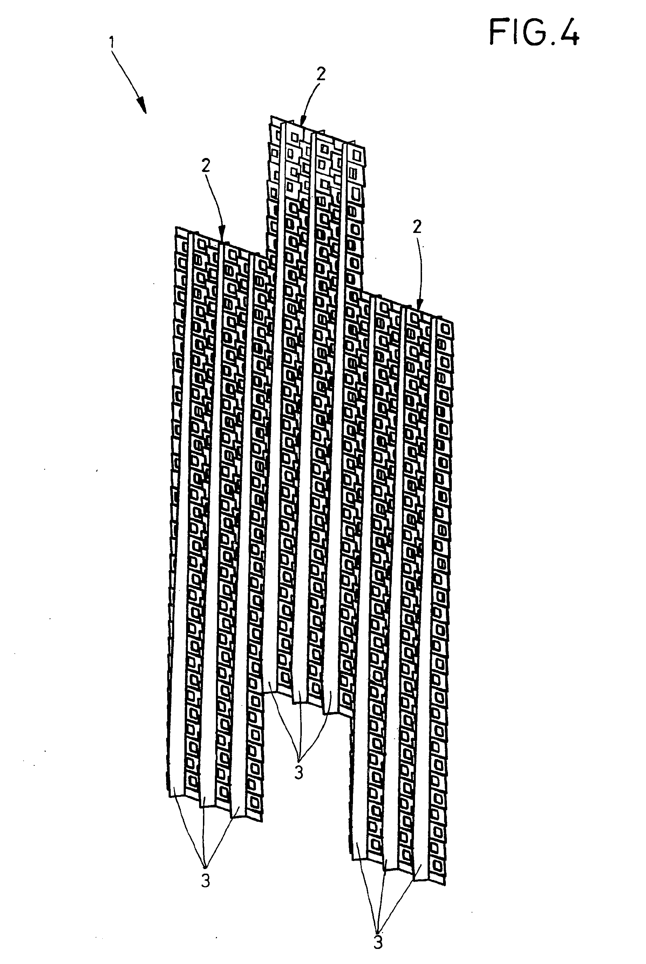

Fig. 4 zeigt demgegenüber eine deutlich höhere Hubhöhe, wie sie für die Demontage oder Montage des mittleren Wandelementes 2 nicht erforderlich ist. Fig. 4 dient lediglich zur Illustration, dass die dort dargestellte Wandanlage 1 aus drei einzelnen Wandelementen 2 aufgebaut ist.

## Patentansprüche

1. Wandelement (2),
mit seitlichen Anschlussmitteln zur Bildung eines Verbunds mit einem benachbarten, gleichartigen Wandelement (2),
wobei die Anschlussmittel als eine Reihe von übereinander angeordneten Laschen (5) ausgestaltet sind,
die Laschen (5) zumindest im Bereich ihrer freien seitlichen Enden gegenüber der Flächenebene des Wandelementes (2) schräg angeordnet sind,
und das Wandelement (2) an seinen beiden Seiten korrespondierend ausgestaltete Laschen (5) aufweist,
derart, dass die Laschen (5) zweier benachbarter, gleichartiger Wandelemente (2) aufgrund ihrer Schrägstellung reißverschlussähnlich ineinander steckbar sind und einen Verbund zur Aufnahme von Kräften bilden, die quer zur Flächenebene des Wandelementes (2) gerichtet sind.

2. Wandelement nach Anspruch 1, **dadurch gekennzeichnet, dass** die Laschen (5) an der einen Seite des Wandelements (2) gegenüber den Laschen (5) an der anderen Seite des Wandelementes (2) höhenversetzt angeordnet sind.

3. Wandelement nach Anspruch 2, **dadurch gekennzeichnet, dass** die Laschen (5) auf beiden Seiten derart höhenversetzt sind, dass sich bei zwei höhengleich direkt nebeneinander angeordneten Wandelementen (2) die Laschen (5) in der Höhe nur teilweise überlappen, wobei die Lasche (5) des einen Wandelementes (2) teilweise vor und teilweise hinter zwei übereinander angeordneten Laschen (5) des jeweils anderen Wandelementes (2) angeordnet ist.

4. Wandelement nach einem der vorhergehenden Ansprüche, **dadurch gekennzeichnet, dass** die Laschen (5) jeweils in sich tordiert sind, derart, dass die frei endende Seitenkante gegenüber der zum Wandelement (2) gerichteten Seitenkante schräg steht.

5. Wandelement nach Anspruch 4, **dadurch gekennzeichnet, dass** die zum Wandelement (2) gerichteten Seitenkanten in einer durchgehenden Linie angeordnet sind.

6. Wandelement nach einem der vorhergehenden Ansprüche, **gekennzeichnet durch** eine Vielzahl von Durchbrüchen (4).

7. Wandelement nach einem der vorhergehenden Ansprüche, **gekennzeichnet durch** aufrecht verlaufende Aussteifungsrippen (3).
